(19) Europäisches Patentamt
European Patent Office
Office européen des brevets

(11) EP 4 729 815 A1

(12) **EUROPEAN PATENT APPLICATION**
published in accordance with Art. 153(4) EPC

(43) Date of publication:
**22.04.2026 Bulletin 2026/17**

(21) Application number: **24823014.6**

(22) Date of filing: **02.02.2024**

(51) International Patent Classification (IPC):
**F16K 31/04** (2006.01)

(52) Cooperative Patent Classification (CPC):
**F16K 31/04;** Y02B 30/70

(86) International application number:
**PCT/JP2024/003540**

(87) International publication number:
**WO 2024/257390 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 JP 2023099387**

(71) Applicant: Fujikoki Corporation
Tokyo 158-0082 (JP)

(72) Inventors:
• **ARAI, Yusuke**
  **Tokyo 158-0082 (JP)**
• **MATSUBARA, Yuta**
  **Tokyo 158-0082 (JP)**

(74) Representative: **Ter Meer Steinmeister & Partner
Patentanwälte mbB
Nymphenburger Straße 4
80335 München (DE)**

(54) **ELECTRIC VALVE**

(57)  [Object] To provide a motor-operated valve that is easy to assemble and allows the position of a valve member to be detected more accurately.

[Solution] A motor-operated valve 1 includes a valve body 10, a can 30, a driving shaft 70, a planetary gear mechanism 60 that transmits the rotation of a rotor 51 to the driving shaft 70, a valve member 40 that is disposed in a valve chamber 13 of the valve body 10 and changes in position in an up-and-down direction in response to the rotation of the driving shaft 70, and a magnetic sensor 85 that is disposed outside the can 30. The motor-operated valve 1 includes a driving magnet 76 that is mounted on the driving shaft 70 and rotates together with the driving shaft 70, and a driven magnet 77 that has a circular annular shape and encloses the driving magnet 76. The driven magnet 77 rotates about the driving shaft 70 in response to the rotation of the driving magnet 76. The magnetic sensor 85 detects magnetism of the driven magnet 77.

FIG.2

# Description

Technical Field

The present invention relates to a motor-operated valve.

Background Art

Patent Literature 1 discloses an example of a motor-operated valve according to the related art. The motor-operated valve in Patent Literature 1 includes a valve body, a valve member, a driving shaft, a guide member, a gear mechanism, and a stepping motor. The valve body has a valve port. The valve member is pushed by a valve opening spring in a direction away from the valve port. The driving shaft has an external thread. The driving shaft is connected to an output shaft of the gear mechanism. The valve port, the valve member, the driving shaft, and the output shaft are aligned on a straight line. The guide member has an internal thread into which the external thread of the driving shaft is screwed.

The stepping motor includes a rotor and a stator. The rotation of the rotor is reduced in speed by the gear mechanism and is transmitted from the output shaft to the driving shaft. When the driving shaft is rotated, the driving shaft is moved by a screw-feed action. When the rotor rotates in a first direction, the driving shaft pushes the valve member, and the valve member moves toward the valve port. When the rotor rotates in a second direction, the driving shaft moves away from the valve port, the valve opening spring pushes the valve member, and the valve member moves away from the valve port.

Citation List

Patent Literature

Patent Literature 1: Japanese Unexamined Patent Application Publication No. 2018-135908

Summary of Invention

Technical Problem

The motor-operated valve in Patent Literature 1 includes a permanent magnet and an angle sensor. The permanent magnet is coaxially mounted to the output shaft and rotates together with the output shaft. The angle sensor outputs a signal corresponding to the rotational angle of the permanent magnet (i.e., the output shaft). The rotational angle corresponds to the position of the valve member.

The output shaft has a slit extending along the straight line. The end of the driving shaft is disposed in the slit, thereby connecting the output shaft and the driving shaft and transmitting the rotation of the output shaft to the driving shaft. The driving shaft can move in a direction of the straight line relative to the output shaft.

However, due to a gap between the inner surface of the slit of the output shaft and the outer surface of the end of the driving shaft, the rotational angle of the output shaft does not coincide with the rotational angle of the driving shaft in the strict sense. Therefore, the rotational angle obtained based on the signal from the angle sensor does not accurately correspond to the position of the valve member.

In a configuration in which the driving shaft is integrally connected to the output shaft of the gear mechanism, the rotational angle of the output shaft coincides with the rotational angle of the driving shaft. However, since the driving shaft and the gear mechanism substantially form a single component, the assembly of the motor-operated valve becomes more difficult because the mounting of the driving shaft and the installation of the gear mechanism are performed concurrently.

Accordingly, it is an object of the present invention to provide a motor-operated valve that is easy to assemble and allows the position of a valve member to be detected more accurately.

Solution to Problem

A motor-operated valve includes a valve body that has a valve chamber, a case that has a cylindrical shape and is mounted on the valve body, a magnet rotor that is disposed inside the case, a driving shaft that is disposed inside the case, a gear mechanism that transmits rotation of the magnet rotor to the driving shaft, a valve member that is disposed in the valve chamber and changes in position in response to rotation of the driving shaft, and a magnetic sensor that is disposed outside the case. The motor-operated valve includes a driving magnet that is mounted on the driving shaft and rotates together with the driving shaft, and a driven magnet that has an annular shape and encloses the driving magnet. The driven magnet rotates about the driving shaft in response to rotation of the driving magnet. The magnetic sensor detects magnetism of the driven magnet.

A motor-operated valve includes a valve body that has a valve chamber, a case that has a cylindrical shape and is mounted on the valve body, a magnet rotor that is disposed inside the case, a driving shaft that is disposed inside the case, a gear mechanism that transmits rotation of the magnet rotor to the driving shaft, a valve member that is disposed in the valve chamber and changes in position in response to rotation of the driving shaft, and a magnetic sensor that is disposed outside the case. The motor-operated valve includes a driving magnet that is mounted on the driving shaft and rotates together with the driving shaft, and a magnetic transmission member that is disposed between the driving magnet and the case and extends in a radial direction of the case. A first end of the magnetic transmission member faces the driving magnet, and a second end of the magnetic transmission member faces an inner circumferential surface of the case. The magnetic sensor detects magnetism of the magnetic transmission member.

To achieve the object above, a motor-operated valve according to an aspect of the present invention includes: a valve body that has a valve chamber; a case that has a cylindrical shape and is mounted on the valve body; a magnet rotor that is disposed inside the case; a driving shaft that is disposed inside the case; a gear mechanism that transmits rotation of the magnet rotor to the driving shaft; a valve member that is disposed in the valve chamber and changes in position in response to rotation of the driving shaft; and a magnetic sensor that is disposed outside the case.

The motor-operated valve includes a driving magnet that rotates about an axis of the driving shaft together with the driving shaft or rotates about the axis when the valve member changes in position.

(i) The motor-operated valve includes a driven magnet that rotates about the axis as the driving magnet rotates, and the magnetic sensor detects magnetism of the driven magnet, or
(ii) the motor-operated valve includes a magnetic transmission member, a first end of the magnetic transmission member faces the driving magnet, a second end of the magnetic transmission member faces an inner surface of the case, and the magnetic sensor detects magnetism of the magnetic transmission member.

In the present invention, preferably, the motor-operated valve includes the driven magnet, the driven magnet has an annular shape, and the driving magnet is disposed in the driven magnet.

In the present invention, preferably, the motor-operated valve includes the driven magnet, and the driven magnet is spaced apart from the driving magnet in a direction of the axis.

In the present invention, preferably, the motor-operated valve includes a guide member that is fixed with respect to the valve body and has an internal thread. Preferably, the driving shaft has an external thread that is screwed into the internal thread of the guide member. Preferably, the valve body has a valve port that faces the valve member. Preferably, the valve member and the valve port are coaxial with the axis. Preferably, the driving shaft moves in the direction of the axis when the driving shaft rotates. Preferably, the valve member changes in position in the direction of the axis in response to movement of the driving shaft.

In the present invention, preferably, the driving magnet has an internal thread. Preferably, the valve member has an external thread that is screwed into the internal thread of the driving magnet. Preferably, the driving magnet rotates when the valve member changes in position in the direction of the axis.

In the present invention, preferably, the valve member is a rotary valve member that is mounted on the driving shaft and rotates together with the driving shaft.

In the present invention, preferably, the motor-operated valve includes a stator that is disposed outside the case and forms a motor together with the magnet rotor, and a magnetic shield member that is disposed between the stator and the magnetic sensor.

Advantageous Effects of Invention

According to the present invention, the driving magnet rotates together with the driving shaft or rotates when the valve member changes in position. The driven magnet is magnetically coupled with the driving magnet and rotates about the axis of the driving shaft as the driving magnet rotates. With this configuration, the rotational angle of the driven magnet coincides with the rotational angle of the driving magnet, allowing the magnetic sensor to output a signal that more accurately corresponds to the rotational angle of the driving shaft or the position of the valve member. Accordingly, the position of the valve member can be detected more accurately without integrating of the driving shaft with an output shaft of the gear mechanism.

According to the present invention, the driving magnet rotates together with the driving shaft or rotates when the valve member changes in position. The first end of the magnetic transmission member faces the driving magnet, and the second end of the magnetic transmission member faces the inner surface of the case. With this configuration, a magnetic pole having the same polarity as a magnetic pole of the driving magnet that faces the first end of the magnetic transmission member appears at the second end, allowing the magnetic sensor to output a signal that more accurately corresponds to the rotational angle of the driving shaft or the position of the valve member. Accordingly, the position of the valve member can be detected more accurately without integrating of the driving shaft with the output shaft of the gear mechanism.

Therefore, the motor-operated valve is easy to assemble and allows the position of a valve member to be detected more accurately.

Brief Description of Drawings

[Fig. 1] Fig. 1 is a longitudinal sectional view of a motor-operated valve according to a first embodiment of the present invention.
[Fig. 2] Fig. 2 is a longitudinal sectional view of a valve body assembly of the motor-operated valve.
[Fig. 3] Fig. 3 is an enlarged longitudinal sectional view of the motor-operated valve illustrating a driving shaft and members in its vicinity.
[Fig. 4] Fig. 4 is a sectional view taken along line IV-IV of Fig. 3.

[Fig. 5] Fig. 5 is a diagram illustrating magnetic pole arrangements of a driving magnet and a driven magnet of the motor-operated valve.

[Fig. 6] Fig. 6 is a longitudinal sectional view illustrating a first modification of the motor-operated valve in Fig. 1.

[Fig. 7] Fig. 7 is a longitudinal sectional view illustrating a second modification of the motor-operated valve in Fig. 1.

[Fig. 8] Fig. 8 is an enlarged sectional view of a motor-operated valve according to a second embodiment of the present invention illustrating a driving shaft and members in its vicinity.

[Fig. 9] Fig. 9 is a sectional view taken along line IX-IX of Fig. 8.

[Fig. 10] Fig. 10 is a longitudinal sectional view of a motor-operated valve according to a third embodiment of the present invention.

[Fig. 11] Fig. 11 is an enlarged longitudinal sectional view of the motor-operated valve in Fig. 10 illustrating a driving shaft and members in its vicinity.

[Fig. 12] Fig. 12 is a diagram illustrating magnetic pole arrangements of a driving magnet and a driven magnet of the motor-operated valve in Fig. 10.

[Fig. 13] Fig. 13 is a longitudinal sectional view of a motor-operated valve according to a fourth embodiment of the present invention.

[Fig. 14] Fig. 14 is an enlarged longitudinal sectional view of the motor-operated valve in Fig. 13 illustrating a driving shaft and members in its vicinity.

Description of Embodiments

(First embodiment)

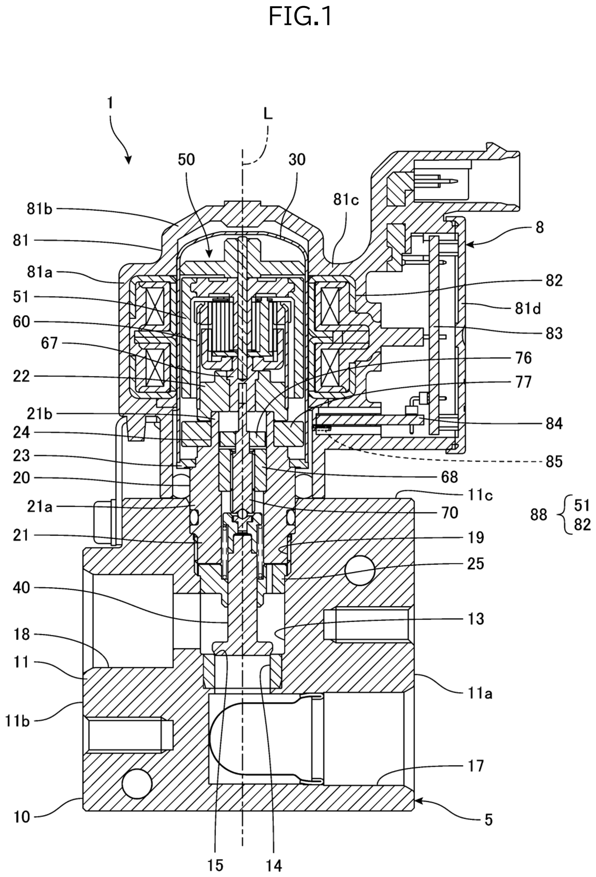

A motor-operated valve according to a first embodiment of the present invention is described below with reference to Figs. 1 to 7. The motor-operated valve according to the present embodiment is used, for example, to control the flow rate of refrigerant in an automotive air conditioner.

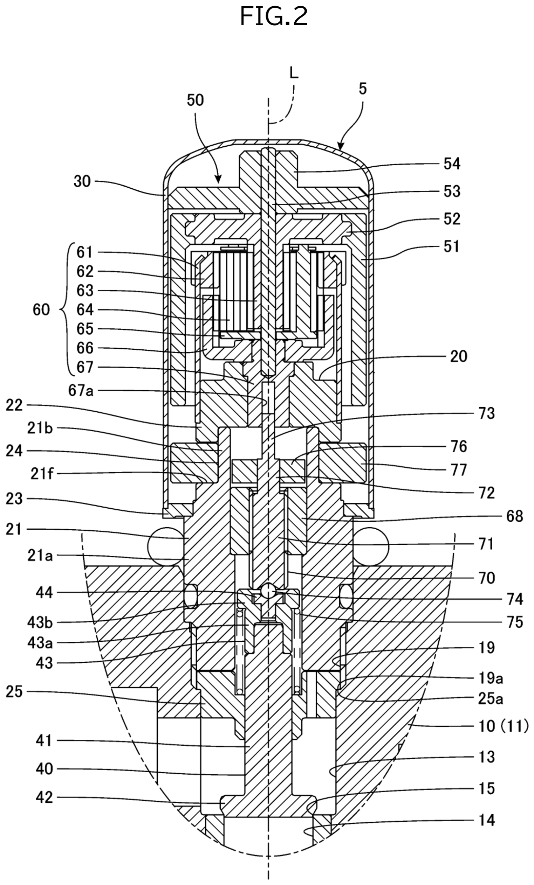

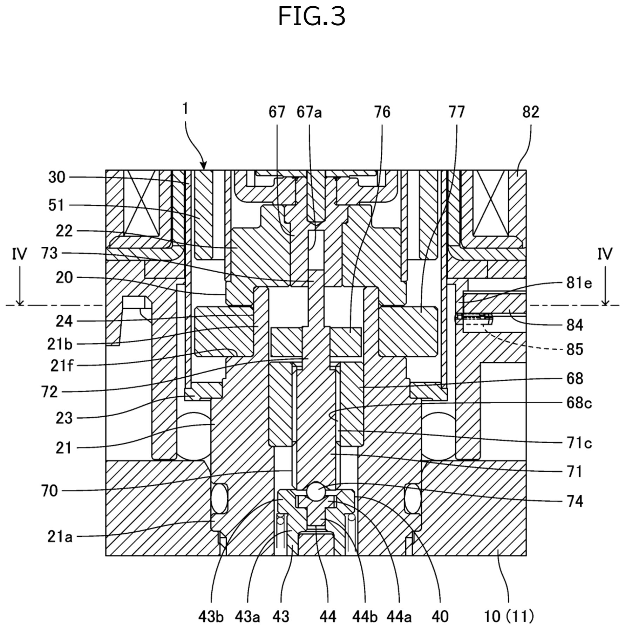

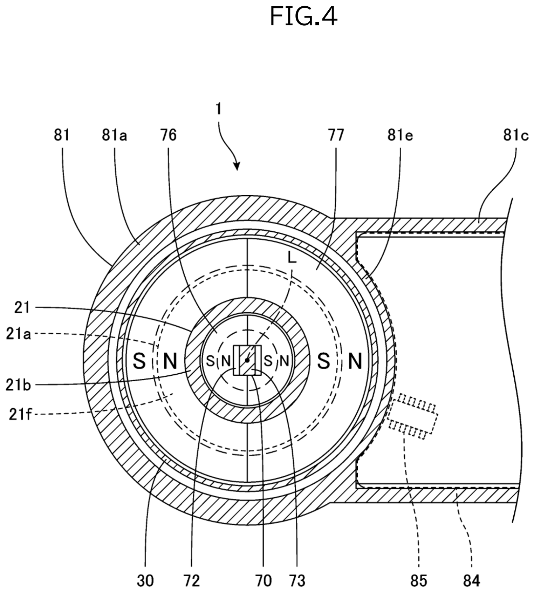

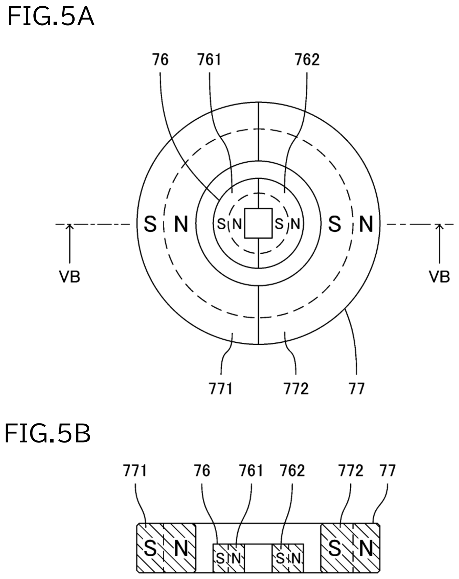

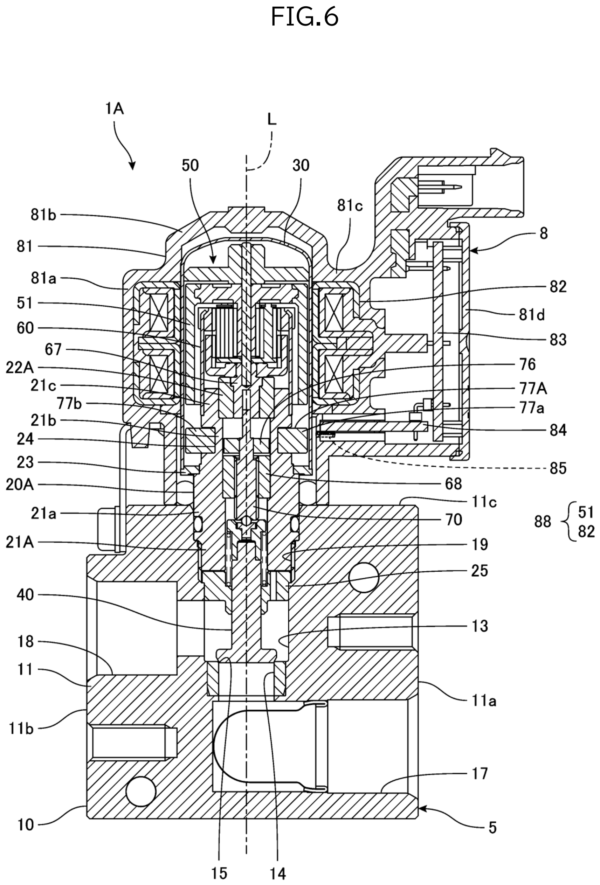

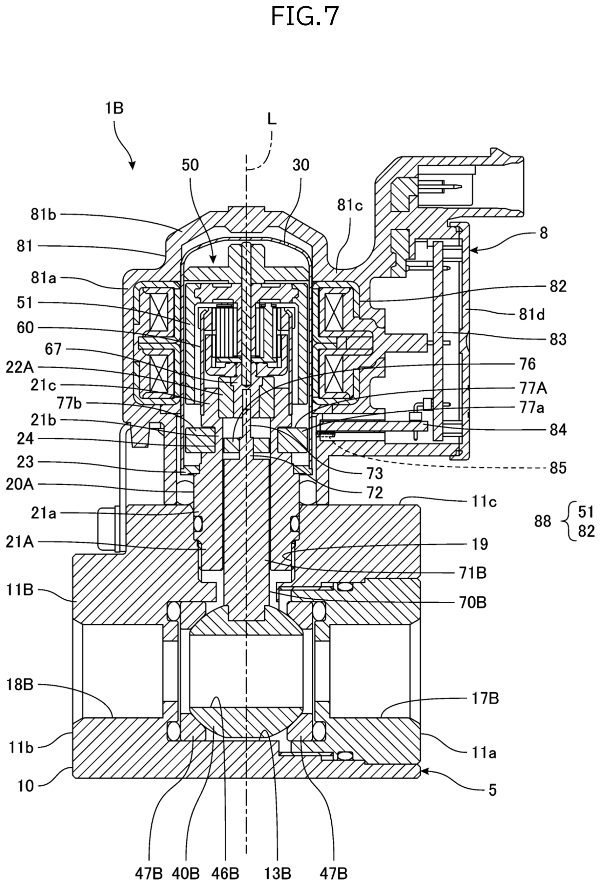

Fig. 1 is a longitudinal sectional view of the motor-operated valve according to the first embodiment of the present invention. Fig. 2 is a longitudinal sectional view of a valve body assembly of the motor-operated valve. Fig. 3 is an enlarged longitudinal sectional view of a driving shaft and members in its vicinity of the motor-operated valve. Fig. 4 is a sectional view taken along line IV-IV of Fig. 3. In Fig. 4, a sub circuit board and a magnetic sensor are illustrated by dashed lines. Fig. 5 is a diagram illustrating magnetic pole arrangements of a driving magnet and a driven magnet of the motor-operated valve. Fig. 5A is a plan view of the driving magnet and the driven magnet of the motor-operated valve. Fig. 5B is a sectional view taken along line VB-VB of Fig. 5A. Fig. 6 is a longitudinal sectional view illustrating a first modification of the motor-operated valve in Fig. 1. Fig. 7 is a longitudinal sectional view illustrating a second modification of the motor-operated valve in Fig. 1. Figs. 1 to 3, 5B, 6, and 7 are sectional views taken along an axis L. Fig. 4 is a sectional view perpendicular to the axis L.

As illustrated in Fig. 1, a motor-operated valve 1 according to the first embodiment includes a valve body assembly 5 and a stator unit 8.

The valve body assembly 5 includes a valve body 10, a can 30, a valve member 40, a driving mechanism 50, a driving magnet 76, and a driven magnet 77.

The valve body 10 includes a body member 11, a holder 20, and a valve-member supporting member 25.

The body member 11 has a rectangular parallelepiped shape. For example, the body member 11 is made of a metal, such as an aluminum alloy. The body member 11 has a valve chamber 13, a valve port 14, a valve seat 15, a first passage 17, and a second passage 18. The valve port 14 is connected to the valve chamber 13. The valve port 14 is enclosed by the valve seat 15 in the valve chamber 13. The first passage 17 extends from a right surface 11a of the body member 11 to the valve port 14. The first passage 17 is connected to the valve chamber 13 via the valve port 14. The second passage 18 extends from a left surface 11b of the body member 11 to the valve chamber 13. The body member 11 has a mounting hole 19. The mounting hole 19 is provided in an upper surface 11c of the body member 11. An internal thread is provided on the inner circumferential surface of the mounting hole 19. The mounting hole 19 is connected to the valve chamber 13. The body member 11 has an annular flat surface 19a. The annular flat surface 19a is disposed in the part of the body member 11 where the mounting hole 19 is connected to the valve chamber 13.

The holder 20 includes a first member 21, a second member 22, and a connection member 23. For example, the first member 21 and the second member 22 are made of a synthetic resin or a nonmagnetic metal, such as an aluminum alloy or brass. In this specification, the term "nonmagnetic" refers to a characteristic that does not become magnetized or does not substantially become magnetized, even when placed in a magnetic field.

The first member 21 integrally includes a base portion 21a and a supporting portion 21b. The base portion 21a and the supporting portion 21b each have a circular cylindrical shape. The outer diameter of the supporting portion 21b is smaller than the outer diameter of the base portion 21a. The supporting portion 21b is coaxially connected to the upper end of the base portion 21a. The first member 21 has a supporting surface 21f. The supporting surface 21f is a circular annular plane facing upward. The supporting surface 21f is disposed in the part of the first member 21 where the supporting portion 21b is connected to the base portion 21a. An external thread is provided on the outer circumferential surface of the base portion 21a. The external thread of the base portion 21a is screwed into the internal thread of the mounting hole 19 of the body member 11. The holder 20 is mounted on the body member 11 by a threaded structure.

The second member 22 has a circular cylindrical shape. The inner diameter of the second member 22 is smaller than the inner diameter of the supporting portion 21b of the first member 21. The second member 22 is coaxially joined to the upper end of the supporting portion 21b. The first member 21 and the second member 22 form an annular groove 24, the bottom of which is defined by the outer circumferential surface of the supporting portion 21b.

The connection member 23 has a circular annular shape. The base portion 21a of the first member 21 is disposed in the connection member 23, and the inner peripheral edge of the connection member 23 is joined to the base portion 21a.

The valve-member supporting member 25 has a circular cylindrical shape. The valve-member supporting member 25 is disposed in the mounting hole 19, between the body member 11 and the first member 21. The lower part of the valve-member supporting member 25 is press-fitted into the valve chamber 13. An annular flat surface 25a facing downward is provided on the outer circumferential surface of the valve-member supporting member 25. The annular flat surface 25a is in contact with the annular flat surface 19a of the body member 11.

The can 30 has a circular cylindrical shape. The can 30 is closed at the upper end and is open at the lower end. The lower end of the can 30 is joined to the outer peripheral edge of the connection member 23. The can 30 is fixed to the body member 11 via the connection member 23 and the holder 20. The can 30 is a case mounted on the valve body 10. For example, the can 30 is made of a metal, such as a nonmagnetic stainless steel.

The valve member 40 includes a stem 41, a valve portion 42, a spring receiving portion 43, and a ball receiving portion 44.

The stem 41 has a circular columnar shape. The stem 41 is disposed in the valve-member supporting member 25. The stem 41 is supported by the valve-member supporting member 25 and is movable in an up-and-down direction (i.e., a direction of the axis L).

The valve portion 42 has a circular annular shape. The valve portion 42 is integrally formed with the stem 41 and is disposed at the lower end of the stem 41. The valve portion 42 projects radially outward from the outer circumferential surface of the stem 41. The valve portion 42 faces the valve port 14 in the up-and-down direction.

The spring receiving portion 43 includes a body 43a and a flange 43b. The body 43a has a circular columnar shape. The outer diameter of the body 43a is equal to the outer diameter of the stem 41. The body 43a is coaxially joined to the upper end of the stem 41. The flange 43b has a circular annular shape. The flange 43b is integrally formed with the body 43a and is disposed at the upper end of the body 43a. The flange 43b projects radially outward from the outer circumferential surface of the body 43a.

The ball receiving portion 44 includes a flat plate 44a that has a circular shape and a projection 44b that is connected to the lower surface of the flat plate 44a. A conical recess is provided in the upper surface of the flat plate 44a. The projection 44b is fitted into a hole provided in the body 43a of the spring receiving portion 43. The ball receiving portion 44 is fixed to the spring receiving portion 43.

The valve portion 42 moves toward and away from the valve port 14, thereby varying the opening area of the valve port 14 in a stepless or substantially stepless manner. When the valve portion 42 comes into contact with the valve seat 15, the opening area of the valve port 14 becomes zero (i.e., in a fully closed state). The minimum opening area of the valve port 14 may be greater than zero.

The driving mechanism 50 moves the valve member 40 in the up-and-down direction. The movement of the valve member 40 in the up-and-down direction is equivalent to a change in the position of the valve member 40 in the up-and-down direction. The driving mechanism 50 includes a rotor 51, a connecting plate 52, a rotor shaft 53, a bearing member 54, a planetary gear mechanism 60, a guide member 68, a driving shaft 70, a ball 74, and a valve opening spring 75.

The rotor 51 has a circular cylindrical shape. The outer diameter of the rotor 51 is smaller than the inner diameter of the can 30. The rotor 51 is rotatably disposed inside the can 30. The connecting plate 52 is joined to the upper end of the rotor 51. The connecting plate 52 has a disc shape and closes the upper end of the rotor 51. The rotor shaft 53 extends through the center of the connecting plate 52. The rotor 51 is coupled with the rotor shaft 53 via the connecting plate 52. The bearing member 54 supports the upper end of the rotor shaft 53 to be rotatable. The rotor shaft 53 rotates together with the rotor 51.

The rotor 51 is a magnet rotor that has a plurality of north (N) poles and a plurality of south (S) poles. The N poles and the S poles are alternately arranged one after another in the circumferential direction on the outer circumferential surface of the rotor 51. The N poles and the S poles each extend in the up-and-down direction.

The planetary gear mechanism 60 is a 3K-type planetary gear mechanism. The planetary gear mechanism 60 may be, for example, a 2K-H-type planetary gear mechanism. The planetary gear mechanism 60 serves as a speed reducer that reduces the rotational speed of the rotor 51. The motor-operated valve 1 may use another type of gear mechanism that functions as a speed reducer instead of the planetary gear mechanism 60.

The planetary gear mechanism 60 is disposed inside the rotor 51. The planetary gear mechanism 60 includes a gear case 61, a fixed ring gear 62, a sun gear 63, a plurality of planetary gears 64, a carrier 65, an output gear 66, and an output shaft 67.

The gear case 61 has a circular cylindrical shape. The lower end of the gear case 61 is coaxially joined to the second member 22 of the holder 20. The fixed ring gear 62 is an internal gear. The fixed ring gear 62 is fixed to the upper end of the gear case 61.

The sun gear 63 is integrally formed with the connecting plate 52 and is coaxially disposed on the lower surface of the connecting plate 52. The rotor shaft 53 extends through the sun gear 63.

The carrier 65 has a disc shape. The rotor shaft 53 extends through the carrier 65. The carrier 65 is rotatable about the rotor shaft 53. The carrier 65 supports the planetary gears 64 to be rotatable.

The output gear 66 has a circular cylindrical shape with a bottom. The output gear 66 is an internal gear. The upper parts of the planetary gears 64 are disposed between the fixed ring gear 62 and the sun gear 63, and the lower parts of the planetary gears 64 are disposed between the output gear 66 and the sun gear 63.

The output shaft 67 has a circular columnar shape. The upper part of the output shaft 67 is press-fitted into a hole provided in the bottom of the output gear 66. A slit 67a extending in the up-and-down direction is provided in the lower part of the output shaft 67. The output shaft 67 supports the lower end of the rotor shaft 53 to be rotatable. The output shaft 67 is disposed inside the second member 22 of the holder 20. The output shaft 67 is rotatably supported by the second member 22. The output shaft 67 rotates together with the output gear 66.

The sun gear 63 rotates together with the rotor 51 and the connecting plate 52. The rotation of the sun gear 63 is reduced in speed by the fixed ring gear 62, the planetary gears 64, the carrier 65, and the output gear 66 and is transmitted to the output shaft 67.

The guide member 68 has a circular cylindrical shape. The guide member 68 is disposed inside the base portion 21a of the first member 21 of the holder 20. The guide member 68 is fixed to the first member 21. The guide member 68 has an internal thread 68c. The internal thread 68c is provided on the inner circumferential surface of the guide member 68.

The driving shaft 70 integrally includes a first section 71, a second section 72, and a third section 73. For example, the driving shaft 70 is made of a synthetic resin or a metal, such as a nonmagnetic stainless steel.

The first section 71 has a circular columnar shape. The first section 71 has an external thread 71c. The external thread 71c is provided on the outer circumferential surface of the first section 71. The external thread 71c is screwed into the internal thread 68c of the guide member 68. A conical recess is provided in the lower end surface of the first section 71. The ball 74 is joined to the recess of the first section 71. The ball 74 is in slidable contact with the recess of the flat plate 44a of the ball receiving portion 44.

The second section 72 has a quadrangular prismatic shape. The lower end of the second section 72 is connected to the upper end of the first section 71.

The third section 73 has a rectangular flat plate-like shape. The lower end of the third section 73 is connected to the upper end of the second section 72. The thickness of the third section 73 is slightly smaller than the width of the slit 67a of the output shaft 67. The third section 73 is disposed in the slit 67a. The slit 67a and the third section 73 allow the driving shaft 70 to move in the up-and-down direction relative to the output shaft 67, while transmitting the rotation of the output shaft 67 to the driving shaft 70.

The valve opening spring 75 is disposed between the valve-member supporting member 25 and the flange 43b of the valve member 40. The valve opening spring 75 is a compression coil spring. The valve opening spring 75 pushes the valve member 40 upward (i.e., in a direction away from the valve port 14).

The driving magnet 76 has a circular annular shape. The driving magnet 76 has a circular outer peripheral edge and a rectangular inner peripheral edge. The outer diameter of the driving magnet 76 is slightly smaller than the inner diameter of the supporting portion 21b of the first member 21 of the holder 20. The driving magnet 76 is disposed inside the supporting portion 21b. The driving magnet 76 includes semicircular arc portions 761 and 762 that are demarcated based on its diameter. In the semicircular arc portion 761, one N pole and one S pole are arranged in this order from the inner side to the outer side in the radial direction, and in the semicircular arc portion 762, one S pole and one N pole are arranged in this order from the inner side to the outer side in the radial direction. The second section 72 of the driving shaft 70 is disposed in the driving magnet 76. The driving magnet 76 is fixed to the driving shaft 70. The driving magnet 76 rotates together with the driving shaft 70. The driving magnet 76 rotates about the axis L. The driving magnet 76 is a permanent magnet.

The driven magnet 77 has a circular annular shape. The driven magnet 77 has a circular outer peripheral edge and a circular inner peripheral edge. The outer diameter of the driven magnet 77 is slightly smaller than the inner diameter of the can 30. The inner diameter of the driven magnet 77 is slightly larger than the outer diameter of the supporting portion 21b of the first member 21 of the holder 20. The supporting portion 21b is disposed in the driven magnet 77. The inner peripheral edge of the driven magnet 77 is disposed in the annular groove 24. The driven magnet 77 includes semicircular arc portions 771 and 772 that are demarcated based on its diameter. In the semicircular arc portion 771, one N pole and one S pole are arranged in this order from the inner side to the outer side in the radial direction, and in the semicircular arc portion 772, one S pole and one N pole are arranged in this order from the inner side to the outer side in the radial direction. The lower surface of the driven magnet 77 is in slidable contact with the supporting surface 21f of the first member 21. The driven magnet 77 is disposed between the supporting portion 21b and the can 30 and is rotatable about the axis L. The driven magnet 77 is a permanent magnet.

The driving magnet 76 is disposed inside the driven magnet 77. The driven magnet 77 is radially positioned relative to the driving magnet 76 with the supporting portion 21b of the first member 21 of the holder 20 interposed therebetween and encloses the driving magnet 76. As a result, the size of the motor-operated valve 1 in the up-and-down direction can be reduced. The driving magnet 76 and the driven magnet 77 are magnetically coupled. The driven magnet 77 rotates about the axis L as the driving magnet 76 rotates. The driving magnet 76 and the driven magnet 77 may have magnetic pole arrangements different from the magnetic pole arrangements illustrated in Fig. 5, as long as the driving magnet 76 and the driven magnet 77 are magnetically coupled and the driven magnet 77 rotates about the axis L as the driving magnet 76 rotates. The shape of the driving magnet 76 is not limited to the circular annular shape.

The stator unit 8 includes a housing 81, a stator 82, a main circuit board 83, a sub circuit board 84, and a magnetic sensor 85.

The housing 81 is made of a synthetic resin. The housing 81 includes a peripheral wall portion 81a, an upper wall portion 81b, a case portion 81c, and a cover portion 81d. The peripheral wall portion 81a has a circular cylindrical shape. The upper wall portion 81b has a dome shape. The upper wall portion 81b is connected to the upper end of the peripheral wall portion 81a. The case portion 81c has a rectangular cylindrical shape. The case portion 81c extends from the peripheral wall portion 81a in a lateral direction (i.e., in a direction perpendicular to the axis L). The cover portion 81d is joined to the distal end of the case portion 81c. The inner space of the case portion 81c is hermetically sealed.

The stator 82 forms a stepping motor 88 together with the rotor 51. The stator 82 is embedded in the peripheral wall portion 81a of the housing 81. The stator 82 is disposed outside the can 30. The motor-operated valve 1 may include another type of motor instead of the stepping motor 88.

The main circuit board 83 is disposed inside the case portion 81c so as to extend in the up-and-down direction. Coils of the stator 82 are connected to the main circuit board 83. A computer (not shown) is mounted on the main circuit board 83.

The sub circuit board 84 is disposed inside the case portion 81c so as to extend in the lateral direction. The sub circuit board 84 is electrically connected to the main circuit board 83. The magnetic sensor 85 is mounted on the sub circuit board 84.

The magnetic sensor 85 is a rotational angle sensor that outputs a signal (an analog signal) corresponding to the rotational angle of a magnetic field. The magnetic sensor 85 is disposed near a partition wall 81e that is provided in the peripheral wall portion 81a of the housing 81. The magnetic sensor 85 radially faces the outer circumferential surface of the driven magnet 77 with the can 30 and the partition wall 81e interposed therebetween. The magnetic sensor 85 is disposed outside the can 30, detects the magnetism of the driven magnet 77, and outputs a signal corresponding to the rotational angle of the driven magnet 77.

In the present embodiment, the magnetic sensor 85 is disposed below the stator 82 and is located close to the stator 82. Accordingly, a magnetic shield member may be disposed between the stator 82 and the magnetic sensor 85. The magnetic shield member has a plate-like shape and is made of, for example, a soft magnetic material having relatively high magnetic permeability, such as silicon steel. The magnetic shield member suppresses distortion, caused by the stator 82, of the magnetic field near the magnetic sensor 85.

In the motor-operated valve 1, the respective central axes of the valve port 14, the first member 21 (the base portion 21a and the supporting portion 21b), the second member 22, the connection member 23, the valve-member supporting member 25, the can 30, the valve member 40, the rotor 51, the connecting plate 52, the rotor shaft 53, the output shaft 67, the guide member 68, the driving shaft 70 (the first section 71, the second section 72, and the third section 73), the ball 74, the driving magnet 76, the driven magnet 77, and the stator 82 are aligned with the axis L.

The operation of the motor-operated valve 1 is described below.

In the motor-operated valve 1, currents are supplied to the stator 82 to rotate the rotor 51 in a first direction. The rotation of the rotor 51 is reduced in speed by the planetary gear mechanism 60 and is transmitted to the driving shaft 70. When the driving shaft 70 is rotated, the driving shaft 70 is moved downward toward the valve port 14 due to a screw-feed action between the external thread 71c of the driving shaft 70 and the internal thread 68c of the guide member 68. The valve member 40 is pushed downward by the driving shaft 70 and moves downward, thereby reducing the opening area of the valve port 14. When the valve member 40 comes into contact with the valve seat 15 and closes the valve port 14, the motor-operated valve 1 is in the fully closed state.

In the motor-operated valve 1, currents are supplied to the stator 82 to rotate the rotor 51 in a second direction. The rotation of the rotor 51 is reduced in speed by the planetary gear mechanism 60 and is transmitted to the driving shaft 70. When the driving shaft 70 is rotated, the driving shaft 70 is moved upward away from the valve port 14 due to the screw-feed action between the external thread 71c of the driving shaft 70 and the internal thread 68c of the guide member 68. The valve member 40 is pushed upward by the valve opening spring 75 and moves upward, thereby increasing the opening area of the valve port 14. When the valve member 40 is farthest away from the valve port 14, the motor-operated valve 1 is in a fully open state. When the motor-operated valve 1 is in the fully open state, the opening area of the valve port 14 is at its maximum.

Inside the holder 20, the driving magnet 76 rotates together with the driving shaft 70. The driven magnet 77 disposed outside the holder 20 is magnetically coupled with the driving magnet 76 and rotates as the driving magnet 76 rotates. The magnetic sensor 85 outputs the signal corresponding to the rotational angle of the driven magnet 77, and the computer is configured to detect the rotational angle based on the signal. The rotational angle of the driven magnet 77 coincides with the rotational angle of the driving shaft 70 and corresponds to the position of the valve member 40.

As described above, the motor-operated valve 1 includes: the valve body 10 that has the valve chamber 13; the can 30 that has the circular cylindrical shape and is mounted on the valve body 10; the rotor 51 that is disposed inside the can 30; the driving shaft 70 that is disposed inside the can 30; the planetary gear mechanism 60 that transmits the rotation of the rotor 51 to the driving shaft 70; the valve member 40 that is disposed in the valve chamber 13 and changes in position in the up-and-down direction in response to the rotation of the driving shaft 70; and the magnetic sensor 85 that is disposed outside the can 30. The motor-operated valve 1 includes the driving magnet 76 that is mounted on the driving shaft 70 and rotates together with the driving shaft 70, and the driven magnet 77 that has the circular annular shape and encloses the driving magnet 76. The driven magnet 77 rotates about the driving shaft 70 as the driving magnet 76 rotates. The magnetic sensor 85 detects the magnetism of the driven magnet 77.

In the motor-operated valve 1, the driving magnet 76 rotates together with the driving shaft 70. The driven magnet 77 encloses the driving magnet 76, is magnetically coupled with the driving magnet 76, and rotates about the driving shaft 70 (i.e., the axis L) as the driving magnet 76 rotates. With this configuration, the rotational angle of the driving shaft 70 coincides with the rotational angle of the driven magnet 77, allowing the magnetic sensor 85 to output a signal that more accurately corresponds to the rotational angle of the driving shaft 70. Accordingly, the rotational angle of the driving shaft 70 (i.e., the position of the valve member 40) can be detected more accurately without integrating of the driving shaft 70 with the output shaft 67 of the planetary gear mechanism 60. Therefore, the motor-operated valve 1 is easy to assemble and allows the position of the valve member 40 to be detected more accurately.

The motor-operated valve 1 includes the guide member 68 that is fixed with respect to the valve body 10 and has the internal thread 68c. The driving shaft 70 has the external thread 71c screwed into the internal thread 68c. The valve body 10 has the valve port 14 that faces the valve member 40 in the up-and-down direction. The valve member 40, the valve port 14, and the driving shaft 70 are coaxial with the axis L. The driving shaft 70 moves in the up-and-down direction (i.e., the direction of the axis L) when the driving shaft 70 rotates. The valve member 40 changes in position in the up-and-down direction in response to the movement of the driving shaft 70. The motor-operated valve 1 has a configuration in which the driving shaft 70 is disposed inside the holder 20 located in the can 30, and the rotational angle of the driving shaft 70 can be detected at a location outside the can 30 by using the magnetic coupling between the driving magnet 76 and the driven magnet 77.

The motor-operated valve 1 includes the stator 82 that is disposed outside the can 30 and forms the stepping motor 88 together with the rotor 51. The motor-operated valve 1 may include the magnetic shield member that is disposed between the stator 82 and the magnetic sensor 85. With this configuration, distortion, caused by the stator 82, of the magnetic field near the magnetic sensor 85 can be suppressed, resulting in more accurate detection of the rotational angle of the driving shaft 70.

Fig. 6 illustrates a motor-operated valve 1A according to the first modification of the motor-operated valve 1, and Fig. 7 illustrates a motor-operated valve 1B according to the second modification of the motor-operated valve 1. In the following description, elements having the same or substantially the same configurations as those of the motor-operated valve 1 are denoted by the same reference signs as those of the motor-operated valve 1, and detailed descriptions of these elements are omitted.

The motor-operated valve 1A illustrated in Fig. 6 has the same configuration as the motor-operated valve 1 except that instead of the holder 20 and the driven magnet 77, the motor-operated valve 1A includes a holder 20A and a driven magnet 77A.

The holder 20A includes a first member 21A, a second member 22A, and a connection member 23. For example, the first member 21A and the second member 22A are made of a synthetic resin or a nonmagnetic metal, such as an aluminum alloy or brass.

The first member 21A integrally includes a base portion 21a, a supporting portion 21b, and a connecting portion 21c. The base portion 21a and the supporting portion 21b have the same configurations as those of the motor-operated valve 1. The connecting portion 21c has a circular cylindrical shape. The outer diameter of the connecting portion 21c is larger than the outer diameter of the supporting portion 21b. The connecting portion 21c is coaxially connected to the upper end of the supporting portion 21b. A gear case 61 of a planetary gear mechanism 60 is coaxially joined to the connecting portion 21c. The first member 21A has an annular groove 24, the bottom of which is defined by the outer circumferential surface of the supporting portion 21b.

The second member 22A has a circular cylindrical shape. The second member 22A is disposed inside the connecting portion 21c of the first member 21A. The second member 22A is coaxially joined to the first member 21A. An output shaft 67 of the planetary gear mechanism 60 is disposed in the second member 22A.

The driven magnet 77A includes a first magnet member 77a and a second magnet member 77b that each have a semicircular arc shape. The first magnet member 77a and the second magnet member 77b are joined at their respective ends to form the driven magnet 77A having a circular annular shape. The first magnet member 77a and the second magnet member 77b are joined together, for example, using an adhesive. Alternatively, the first magnet member 77a and the second magnet member 77b may be joined together by their mutual magnetic attraction. The driven magnet 77A, which is formed by joining the first magnet member 77a and the second magnet member 77b, has the same configuration as the driven magnet 77 of the motor-operated valve 1.

The motor-operated valve 1B illustrated in Fig. 7 has the same configuration as the motor-operated valve 1A except that (1) the valve-member supporting member 25, the ball 74, the valve opening spring 75, and the guide member 68 are omitted, and (2) instead of the body member 11, the valve member 40, and the driving shaft 70, the motor-operated valve 1B includes a body member 11B, a ball valve member 40B, two seat members 47B, and a driving shaft 70B.

The body member 11B has a rectangular parallelepiped shape. For example, the body member 11B is made of a metal, such as an aluminum alloy. The body member 11B has a valve chamber 13B, a first passage 17B, a second passage 18B, and a mounting hole 19. The first passage 17B extends from a right surface 11a of the body member 11B to the valve chamber 13B. The second passage 18B extends from a left surface 11b of the body member 11B to the valve chamber 13B. The mounting hole 19 is provided in an upper surface 11c of the body member 11B. An internal thread is provided on the inner circumferential surface of the mounting hole 19. The mounting hole 19 is connected to the valve chamber 13B.

The ball valve member 40B is a rotary valve member. The ball valve member 40B has a connecting passage 46B that extends through the ball valve member 40B in a lateral direction. The seat members 47B each have a circular annular shape. The seat members 47B are disposed in the valve chamber 13B, and the ball valve member 40B is disposed between the seat members 47B. The seat members 47B support the ball valve member 40B to be rotatable about an axis L. The rotation of the ball valve member 40B about the axis L is equivalent to a change in the position (the rotational position) of the ball valve member 40B about the axis L.

The driving shaft 70B integrally includes a first section 71B, a second section 72, and a third section 73. The second section 72 and the third section 73 have the same configurations as those of the motor-operated valve 1. For example, the driving shaft 70B is made of a synthetic resin or a metal, such as a nonmagnetic stainless steel.

The first section 71B has a circular columnar shape. The lower end of the first section 71B is coaxially joined to the ball valve member 40B.

The ball valve member 40B rotates together with the driving shaft 70B. Depending on the rotational position of the ball valve member 40B, the first passage 17B and the second passage 18B are connected by the connecting passage 46B or disconnected.

The motor-operated valves 1A and 1B have the same effects as the motor-operated valve 1.

(Second embodiment)

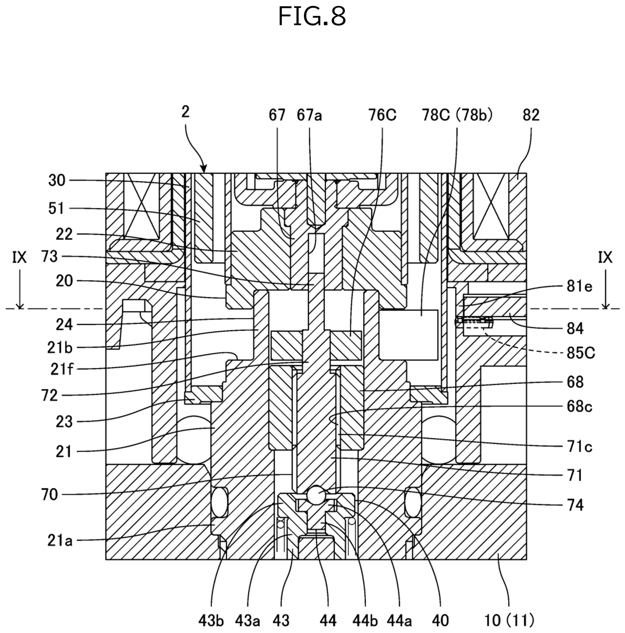

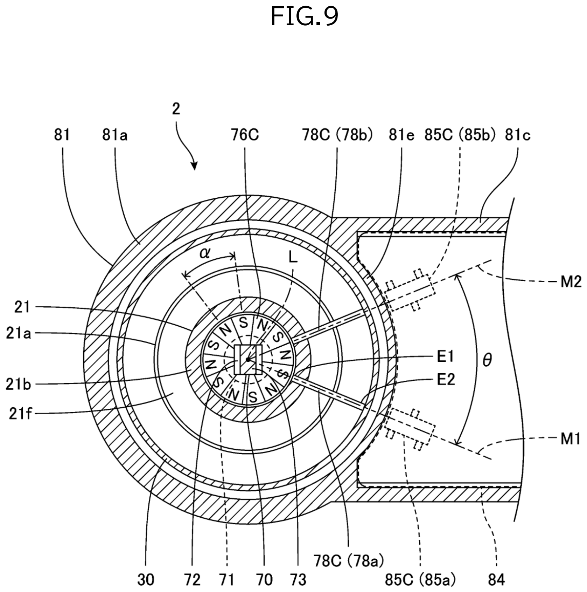

A motor-operated valve according to a second embodiment of the present invention is described below with reference to Figs. 8 and 9. A motor-operated valve 2 according to the present embodiment has the same configuration as the motor-operated valve 1 except that instead of the driving magnet 76, the driven magnet 77, and the magnetic sensor 85, the motor-operated valve 2 includes a driving magnet 76C, two magnetic transmission members 78C, and two magnetic sensors 85C. In the following description, elements having the same or substantially the same configurations as those of the motor-operated valve 1 are denoted by the same reference signs as those of the motor-operated valve 1, and detailed descriptions of these elements are omitted.

Fig. 8 is an enlarged sectional view of the motor-operated valve according to the second embodiment of the present invention illustrating a driving shaft and members in its vicinity. Fig. 9 is a sectional view taken along line IX-IX of Fig. 8.

The driving magnet 76C has a circular annular shape. The driving magnet 76C has a circular outer peripheral edge and a rectangular inner peripheral edge. The outer diameter of the driving magnet 76C is slightly smaller than the inner diameter of a supporting portion 21b of a first member 21 of a holder 20. The driving magnet 76C is disposed inside the supporting portion 21b. The driving magnet 76C has a plurality of N poles and a plurality of S poles. The N poles and the S poles are alternately arranged one after another at regular angular intervals in the circumferential direction on the outer circumferential surface of a rotor 51. The driving magnet 76C has six N poles and six S poles. The angle between the N poles and the S poles adjacent to each other is 30 degrees. A second section 72 of a driving shaft 70 is disposed in the driving magnet 76C. The driving magnet 76C is fixed to the driving shaft 70. The driving magnet 76C rotates together with the driving shaft 70.

The magnetic transmission members 78C each have a rectangular flat plate-like shape. The magnetic transmission members 78C are made of a soft magnetic material having relatively high magnetic permeability, such as silicon steel. The magnetic transmission members 78C are disposed inside a can 30. The magnetic transmission members 78C extend in the radial direction of the can 30. A first end E1 (one end) of each of the magnetic transmission members 78C is embedded in the supporting portion 21b of the first member 21 of the holder 20. The first end E1 of each of the magnetic transmission members 78C faces the outer circumferential surface of the driving magnet 76C in the radial direction. A second end E2 (the other end) of each of the magnetic transmission members 78C faces the inner circumferential surface of the can 30 in the radial direction. A magnetic pole (an N pole or an S pole) having the same polarity as the magnetic pole of the driving magnet 76C that faces the first end E1 appears at the second end E2. One of the two magnetic transmission members 78C is a first magnetic transmission member 78a, and the other thereof is a second magnetic transmission member 78b. Each of the magnetic transmission members 78C may have any shape, as long as the first end E1 faces the driving magnet 76C in the radial direction and the second end E2 faces a portion of the inner surface of the can 30 corresponding to the magnetic sensor 85C.

Each of the magnetic sensors 85C is a sensor having a Hall element that outputs a signal (a digital signal) corresponding to the orientation of a magnetic field. The magnetic sensors 85C are disposed near a partition wall 81e that is provided in a peripheral wall portion 81a of a housing 81. The magnetic sensors 85C face the second ends E2 of the magnetic transmission members 78C in the radial direction with the can 30 and the partition wall 81e interposed therebetween. The magnetic sensors 85C are disposed outside the can 30, detect the magnetism at the second ends E2 of the magnetic transmission members 78C, and output the signals corresponding to the magnetic poles that appear at the second ends E2. One of the two magnetic sensors 85C is a first magnetic sensor 85a, and the other thereof is a second magnetic sensor 85b.

The first magnetic transmission member 78a and the first magnetic sensor 85a are aligned on a straight line M1 that extends in the radial direction from an axis L. The second magnetic transmission member 78b and the second magnetic sensor 85b are aligned on a straight line M2 that extends in the radial direction from the axis L. The angle θ between the straight lines M1 and M2 preferably satisfies the following expression, where α denotes an angle between the N pole and the S pole adjacent to each other in the driving magnet 76C, and N denotes a natural number.

$$\theta = N\alpha + (\alpha/2)$$

In the present embodiment, α is 30 degrees, and θ is 45 degrees. With this configuration, the first magnetic transmission member 78a faces the center of a magnetic pole (the N pole or the S pole) of the driving magnet 76C, while the second magnetic transmission member 78b faces a portion of the outer circumferential surface of the driving magnet 76C that lies between the N pole and the S pole adjacent to each other. The second magnetic transmission member 78b faces the center of a magnetic pole (the N pole or the S pole) of the driving magnet 76C, while the first magnetic transmission member 78a faces a portion of the outer circumferential surface of the driving magnet 76C that lies between the N pole and the S pole adjacent to each other. Therefore, the timing at which the signal from the first magnetic sensor 85a changes is different from the timing at which the signal from the second magnetic sensor 85b changes, and the rotational angle and rotational direction of the driving magnet 76C can be detected based on the signals.

Inside the holder 20, the driving magnet 76C rotates together with the driving shaft 70. The magnetic transmission members 78C that extend in the radial direction from the holder 20 transmit the magnetism of the driving magnet 76C from the first ends E1 to the second ends E2. The magnetic poles that appear at the second ends E2 change as the driving magnet 76C rotates. The magnetic sensors 85C output the signals corresponding to the magnetic poles that appear at the second ends E2, and a computer is configured to detect the rotational angle and the rotational direction of the driving magnet 76C based on the signals. The rotational angle of the driving magnet 76C coincides with the rotational angle of the driving shaft 70 and corresponds to the position of a valve member 40.

As described above, the motor-operated valve 2 includes the driving magnet 76C that is mounted on the driving shaft 70 and rotates together with the driving shaft 70, and the magnetic transmission members 78C that are disposed between the driving magnet 76C and the can 30 and extend in the radial direction of the can 30. The first ends E1 of the magnetic transmission members 78C face the driving magnet 76C in the radial direction, and the second ends E2 of the magnetic transmission members 78C face the inner circumferential surface of the can 30. The magnetic sensors 85C detect the magnetism at the second ends E2 of the magnetic transmission members 78C.

In the motor-operated valve 2, the magnetic poles having the same polarities as the magnetic poles of the driving magnet 76C that face the first ends E1 of the magnetic transmission members 78C appear at the second ends E2, allowing the magnetic sensors 85C to output the signals that more accurately correspond to the rotational angle of the driving magnet 76C (i.e., the driving shaft 70). Accordingly, the rotational angle of the driving shaft 70 (i.e., the position of the valve member 40) can be detected more accurately without integrating of the driving shaft 70 with an output shaft 67 of a planetary gear mechanism 60. Therefore, the motor-operated valve 2 is easy to assemble and allows the position of the valve member 40 to be detected more accurately.

(Third embodiment)

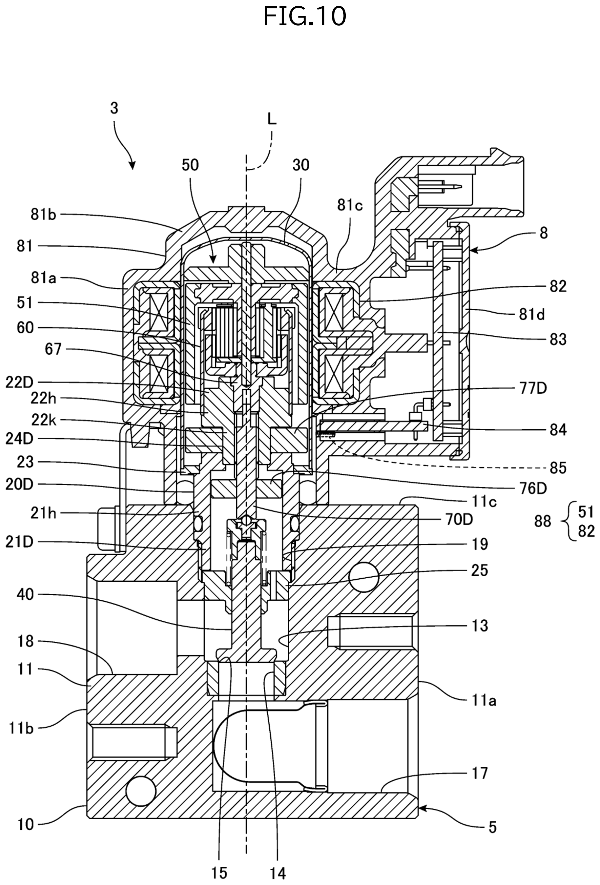

A motor-operated valve according to a third embodiment of the present invention is described below with reference to Figs. 10 to 12. A motor-operated valve 3 according to the present embodiment has the same configuration as the motor-operated valve 1 except that instead of the holder 20, the driving shaft 70, the driving magnet 76, and the driven magnet 77, the motor-operated valve 3 includes a holder 20D, a driving shaft 70D, a driving magnet 76D, and a driven magnet 77D. In the following description, elements having the same or substantially the same configurations as those of the motor-operated valve 1 are denoted by the same reference signs as those of the motor-operated valve 1, and detailed descriptions of these elements are omitted.

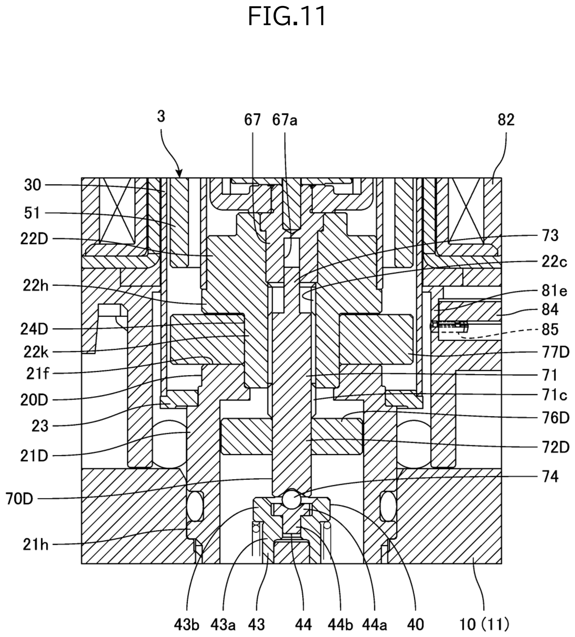

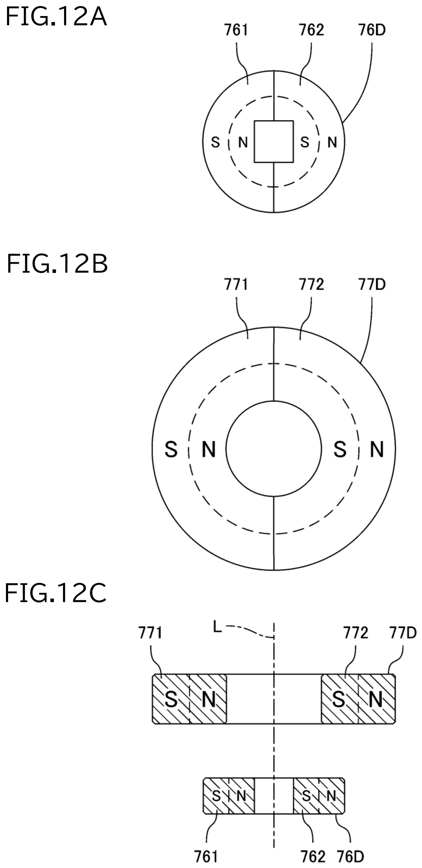

Fig. 10 is a longitudinal sectional view of the motor-operated valve according to the third embodiment of the present invention. Fig. 11 is an enlarged longitudinal sectional view of the motor-operated valve in Fig. 10 illustrating a driving shaft and members in its vicinity. Fig. 12 is a diagram illustrating magnetic pole arrangements of a driving magnet and a driven magnet of the motor-operated valve in Fig. 10. Fig. 12A is a plan view of the driving magnet. Fig. 12B is a plan view of the driven magnet. Fig. 12C is a longitudinal sectional view of the driving magnet and the driven magnet that are coaxially disposed.

The holder 20D includes a first member 21D, a second member 22D, and a connection member 23. For example, the first member 21D and the second member 22D are made of a synthetic resin or a nonmagnetic metal, such as an aluminum alloy or brass.

The first member 21D includes a first base portion 21h. The first base portion 21h has a circular cylindrical shape. The first member 21D has a supporting surface 21f. The supporting surface 21f is a circular annular plane facing upward. The supporting surface 21f is the upper end surface of the first base portion 21h. An external thread is provided on the outer circumferential surface of the first base portion 21h. The external thread of the first base portion 21h is screwed into an internal thread of a mounting hole 19 of a body member 11. The holder 20D is mounted on the body member 11 by a threaded structure.

The second member 22D integrally includes a second base portion 22h and a supporting portion 22k. The second base portion 22h and the supporting portion 22k each have a circular cylindrical shape. The outer diameter of the supporting portion 22k is smaller than the outer diameter of the second base portion 22h. The supporting portion 22k is coaxially connected to the lower end of the second base portion 22h. The lower end of the supporting portion 22k is coaxially joined to the upper end of the first base portion 21h. The first member 21D and the second member 22D form an annular groove 24D, the bottom of which is defined by the outer circumferential surface of the supporting portion 22k. An output shaft 67 of a planetary gear mechanism 60 is disposed in the second base portion 22h.

The second member 22D has an internal thread 22c. The internal thread 22c is provided on the lower part of the inner circumferential surface of the second base portion 22h and the inner circumferential surface of the supporting portion 22k. The second member 22D also functions as a guide member.

The driving shaft 70D integrally includes a first section 71, a second section 72D, and a third section 73. For example, the driving shaft 70D is made of a synthetic resin or a metal, such as a nonmagnetic stainless steel.

The first section 71 has a circular columnar shape. The first section 71 has an external thread 71c. The external thread 71c is provided on the outer circumferential surface of the first section 71. The external thread 71c is screwed into the internal thread 22c of the second member 22D of the holder 20D.

The second section 72D has a quadrangular prismatic shape. The upper end of the second section 72D is connected to the lower end of the first section 71. A conical recess is provided in the lower end surface of the second section 72D. A ball 74 is joined to the recess of the second section 72D.

The third section 73 has a rectangular flat plate-like shape. The lower end of the third section 73 is connected to the upper end of the first section 71. The third section 73 is disposed in a slit 67a of the output shaft 67.

The driving magnet 76D has a circular annular shape. The driving magnet 76D has a circular outer peripheral edge and a rectangular inner peripheral edge. The outer diameter of the driving magnet 76D is slightly smaller than the inner diameter of the first base portion 21h of the first member 21D of the holder 20D. The driving magnet 76D is disposed inside the first base portion 21h. The driving magnet 76D includes semicircular arc portions 761 and 762 that are demarcated based on its diameter. The driving magnet 76D has the same magnetic pole arrangement as the driving magnet 76. The second section 72D of the driving shaft 70D is disposed in the driving magnet 76D. The driving magnet 76D is fixed to the driving shaft 70D. The driving magnet 76D rotates together with the driving shaft 70D. The driving magnet 76D rotates about an axis L. The driving magnet 76D is a permanent magnet.

The driven magnet 77D has a circular annular shape. The driven magnet 77D has a circular outer peripheral edge and a circular inner peripheral edge. The outer diameter of the driven magnet 77D is slightly smaller than the inner diameter of a can 30. The inner diameter of the driven magnet 77D is slightly larger than the outer diameter of the supporting portion 22k of the second member 22D of the holder 20D. The supporting portion 22k is disposed in the driven magnet 77D. The inner peripheral edge of the driven magnet 77D is disposed in the annular groove 24D. The driven magnet 77D includes semicircular arc portions 771 and 772 that are demarcated based on its diameter. The driven magnet 77D has the same magnetic pole arrangement as the driven magnet 77. The lower surface of the driven magnet 77D is in slidable contact with the supporting surface 21f of the first member 21D of the holder 20D. The driven magnet 77D is disposed between the supporting portion 22k and the can 30 and is rotatable about the axis L. The driven magnet 77D is a permanent magnet.

The driven magnet 77D is coaxial with the driving magnet 76D. The driven magnet 77D is positioned above and is spaced apart from the driving magnet 76D. As a result, the size of the motor-operated valve 3 in the radial direction can be reduced. The size constraint on the driving magnet 76D of the motor-operated valve 3 is relaxed compared to that on the driving magnet 76 of the motor-operated valve 1. Therefore, in the motor-operated valve 3, the size of the driving magnet 76D can be increased, allowing the magnetic force of the driving magnet 76D to be enhanced. When the driving magnet 76D and the driven magnet 77D are viewed in an up-and-down direction, the outer peripheral edge of the driving magnet 76D overlaps with the inner peripheral edge of the driven magnet 77D. The driving magnet 76D and the driven magnet 77D are magnetically coupled. The driven magnet 77D rotates about the axis L as the driving magnet 76D rotates.

The motor-operated valve 3 has the same effects as the motor-operated valve 1.

(Fourth embodiment)

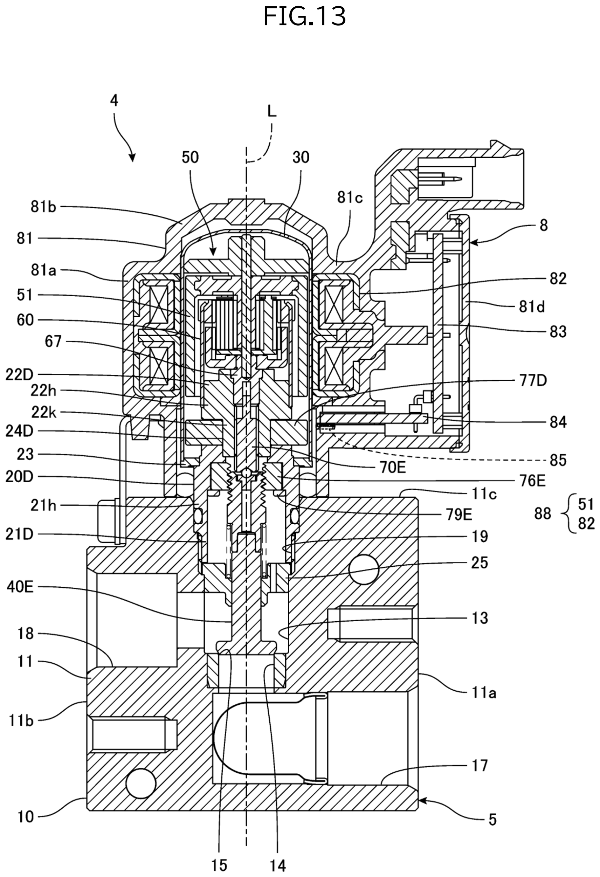

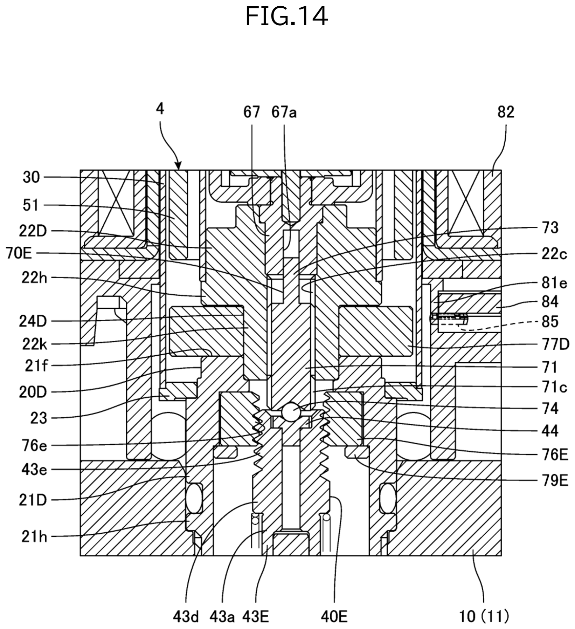

A motor-operated valve according to a fourth embodiment of the present invention is described below with reference to Figs. 13 and 14. A motor-operated valve 4 according to the present embodiment has the same configuration as the motor-operated valve 3 except that instead of the valve member 40, the driving shaft 70D, and the driving magnet 76D, the motor-operated valve 4 includes a valve member 40E, a driving shaft 70E, and a driving magnet 76E. In the following description, elements having the same or substantially the same configurations as those of the motor-operated valves 1 and 3 are denoted by the same reference signs as those of the motor-operated valves 1 and 3, and detailed descriptions of these elements are omitted.

Fig. 13 is a longitudinal sectional view of the motor-operated valve according to the fourth embodiment of the present invention. Fig. 14 is an enlarged longitudinal sectional view of the motor-operated valve in Fig. 13 illustrating a driving shaft and members in its vicinity.

The valve member 40E includes a stem 41, a valve portion 42, a spring receiving portion 43E, and a ball receiving portion 44.

The spring receiving portion 43E includes a body 43a and a thread portion 43d. The body 43a has a circular columnar shape. The outer diameter of the body 43a is equal to the outer diameter of the stem 41. The body 43a is coaxially joined to the upper end of the stem 41. The thread portion 43d has a circular columnar shape. The outer diameter of the thread portion 43d is larger than the outer diameter of the body 43a. The thread portion 43d is integrally formed with the body 43a and is disposed at the upper end of the body 43a. The thread portion 43d has an external thread 43e. The external thread 43e is provided on the outer circumferential surface of the thread portion 43d. The ball receiving portion 44 is fixed to the thread portion 43d.

The driving shaft 70E integrally includes a first section 71 and a third section 73. The lower end of the third section 73 is connected to the upper end of the first section 71. The driving shaft 70E has the same configuration as the driving shaft 70 except that the second section 72 is omitted.

The driving magnet 76E has a circular annular shape. The driving magnet 76E has a circular outer peripheral edge and a circular inner peripheral edge. The driving magnet 76E has an internal thread 76e. The internal thread 76e is provided on the inner circumferential surface of the driving magnet 76E. The outer diameter of the driving magnet 76E is slightly smaller than the inner diameter of a first base portion 21h of a first member 21D of a holder 20D. The driving magnet 76E is disposed inside the first base portion 21h. A holding member 79E is disposed inside the first base portion 21h. The holding member 79E is fixed to the first base portion 21h. The lower surface of the driving magnet 76E is in slidable contact with an upper surface of the holding member 79E. The driving magnet 76E has the same magnetic pole arrangement as the driving magnet 76D. The thread portion 43d of the valve member 40E is disposed in the driving magnet 76E. The external thread 43e of the thread portion 43d is screwed into the internal thread 76e of the driving magnet 76E. When the valve member 40E moves in an up-and-down direction, the driving magnet 76E rotates about an axis L. In other words, when the valve member 40E changes in position in the up-and-down direction, the driving magnet 76E rotates about the axis L. The driving magnet 76E is a permanent magnet.

A driven magnet 77D is coaxial with the driving magnet 76E. The driven magnet 77D is positioned above and is spaced apart from the driving magnet 76E. As a result, the size of the motor-operated valve 4 in the radial direction can be reduced. When the driving magnet 76E and the driven magnet 77D are viewed in the up-and-down direction, the outer peripheral edge of the driving magnet 76E overlaps with the inner peripheral edge of the driven magnet 77D. The driving magnet 76E and the driven magnet 77D are magnetically coupled. The driven magnet 77D rotates about the axis L as the driving magnet 76E rotates.

The motor-operated valve 4 has the same effects as the motor-operated valve 3.

In this specification, the terms indicating shapes, such as "circular cylindrical", "circular columnar", and "rectangular parallelepiped" are also used for members and portions of the members substantially having the shapes indicated by the terms. For example, "circular cylindrical member" includes a circular cylindrical member and a substantially circular cylindrical member.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

Reference Signs List

1 ... motor-operated valve, 5 ... valve body assembly, 8 ... stator unit, 10 ... valve body, 11 ... body member, 11a ... right surface, 11b ... left surface, 11c ... upper surface, 13 ... valve chamber, 14 ... valve port, 15 ... valve seat, 17 ... first passage, 18 ... second passage, 19 ... mounting hole, 19a ... annular flat surface, 20 ... holder, 21 ... first member, 21a ... base portion, 21b ... supporting portion, 21c ... connecting portion, 21f ... supporting surface, 22 ... second member, 23 ... connection member, 24 ... annular groove, 25 ... valve-member supporting member, 25a ... annular flat surface, 30 ... can, 40 ... valve member, 41 ... stem, 42 ... valve portion, 43 ... spring receiving portion, 43a ... body, 43b ... flange, 44 ... ball receiving portion, 44a ... flat plate, 44b ... projection, 50 ... driving mechanism, 51 ... rotor, 52 ... connecting plate, 53 ... rotor shaft, 54 ... bearing member, 60 ... planetary gear mechanism, 61 ... gear case, 62 ... fixed ring gear, 63 ... sun gear, 64 ... planetary gear, 65 ... carrier, 66 ... output gear, 67 ... output shaft, 67a ... slit, 68 ... guide member, 68c ... internal thread, 70 ... driving shaft, 71 ... first section, 71c ... external thread, 72 ... second section, 73 ... third section, 74 ... ball, 75 ... valve opening spring, 76 ... driving magnet, 761 ... semicircular arc portion, 762 ... semicircular arc portion, 77 ... driven magnet, 771 ... semicircular arc portion, 772 ... semicircular arc portion, 81 ... housing, 81a ... peripheral wall portion, 81b ... upper wall portion, 81c ... case portion, 81d ... cover portion, 81e ... partition wall, 82 ... stator, 83 ... main circuit board, 84 ... sub circuit board, 85 ... magnetic sensor, 88 ... stepping motor. 1A ... motor-operated valve, 20A ... holder, 21A ... first member, 22A ... second member, 77A ... driven magnet, 77a ... first magnet member, 77b ... second magnet member. 1B ... motor-operated valve, 11B ... body member, 13B ... valve chamber, 17B ... first passage, 18B ... second passage, 40B ... ball valve member, 46B ... connecting passage, 47B ... seat member, 70B ... driving shaft, 71B ... first section. 2 ... motor-operated valve, 76C ... driving magnet, 78C ... magnetic transmission member, 78a ... first magnetic transmission member, 78b ... second magnetic transmission member, 85C ... magnetic sensor, 85a ... first magnetic sensor, 85b ... second magnetic sensor, E1 ... first end, E2 ... second end. 3 ... motor-operated valve, 20D ... holder, 21D ... first member, 21h ... first base portion, 22D ... second member, 22c ... internal thread, 22h ... second base portion, 22k ... supporting portion, 70D ... driving shaft, 72D ... second section, 76D ... driving magnet, 77D ... driven magnet. 4 ... motor-operated valve, 40E ... valve member, 43E ... spring receiving portion, 43d ... thread portion, 43e ... external thread, 70E ... driving shaft, 76E ... driving magnet, 76e ... internal thread, 79E ... holding member.

## Claims

1. A motor-operated valve comprising:

    a valve body that has a valve chamber;
    a case that has a cylindrical shape and is mounted on the valve body;
    a magnet rotor that is disposed inside the case;
    a driving shaft that is disposed inside the case;
    a gear mechanism that transmits rotation of the magnet rotor to the driving shaft;
    a valve member that is disposed in the valve chamber and changes in position in response to rotation of the driving shaft;
    a magnetic sensor that is disposed outside the case;
    a driving magnet that rotates about an axis of the driving shaft together with the driving shaft or rotates about the axis when the valve member changes in position; and
    a driven magnet that rotates about the axis in response to rotation of the driving magnet,
    wherein the magnetic sensor detects magnetism of the driven magnet.

2. A motor-operated valve comprising:

    a valve body that has a valve chamber;
    a case that has a cylindrical shape and is mounted on the valve body;
    a magnet rotor that is disposed inside the case;
    a driving shaft that is disposed inside the case;
    a gear mechanism that transmits rotation of the magnet rotor to the driving shaft;
    a valve member that is disposed in the valve chamber and changes in position in response to rotation of the driving shaft;
    a magnetic sensor that is disposed outside the case;
    a driving magnet that rotates about an axis of the driving shaft together with the driving shaft or rotates about the axis when the valve member changes in position; and
    a magnetic transmission member,

wherein a first end of the magnetic transmission member faces the driving magnet, a second end of the magnetic transmission member faces an inner surface of the case, and the magnetic sensor detects magnetism of the magnetic transmission member.

3. The motor-operated valve according to Claim 1,

   wherein the driven magnet has an annular shape, and
   wherein the driving magnet is disposed in the driven magnet.

4. The motor-operated valve according to Claim 1, wherein the driven magnet is spaced apart from the driving magnet in a direction of the axis.

5. The motor-operated valve according to Claim 1 or 2, further comprising: a guide member that is fixed with respect to the valve body and has an internal thread,

   wherein the driving shaft has an external thread that is screwed into the internal thread of the guide member,
   wherein the valve body has a valve port that faces the valve member,
   wherein the valve member and the valve port are coaxial with the axis,
   wherein the driving shaft moves in a direction of the axis when the driving shaft rotates, and
   wherein the valve member changes in position in the direction of the axis in response to movement of the driving shaft.

6. The motor-operated valve according to Claim 5,

   wherein the driving magnet has an internal thread,
   wherein the valve member has an external thread that is screwed into the internal thread of the driving magnet, and
   wherein the driving magnet rotates when the valve member changes in position in the direction of the axis.

7. The motor-operated valve according to Claim 1 or 2, wherein the valve member is a rotary valve member that is mounted on the driving shaft and rotates together with the driving shaft.

8. The motor-operated valve according to Claim 1 or 2, further comprising:

   a stator that is disposed outside the case and forms a motor together with the magnet rotor; and
   a magnetic shield member that is disposed between the stator and the magnetic sensor.

# FIG.1

# FIG.2

# FIG.3

EP 4 729 815 A1

# FIG.4

18

FIG.5A

FIG.5B

# FIG.6

# FIG.7

# FIG.8

# FIG.9

# FIG.10

# FIG.11

FIG.12A

761    762    76D

S | N    S | N

FIG.12B

771    772    77D

S | N    S | N

FIG.12C

771    L    772    77D

S | N    S | N

S|N    S|N

761    762  76D

# FIG.13

EP 4 729 815 A1

FIG.14

28

## INTERNATIONAL SEARCH REPORT

International application No.

**PCT/JP2024/003540**

### A. CLASSIFICATION OF SUBJECT MATTER

***F16K 31/04***(2006.01)i

FI:  F16K31/04 A

According to International Patent Classification (IPC) or to both national classification and IPC

### B. FIELDS SEARCHED

Minimum documentation searched (classification system followed by classification symbols)

F16K31/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2018-135908 A (FUJI KOKI CORP.) 30 August 2018 (2018-08-30) | 1, 4-5, 7-8 |
| A | paragraphs [0019]-[0102], fig. 5-12 | 2-3, 6 |
| | paragraphs [0019]-[0102], fig. 5-12 | |
| Y | US 2007/0151322 A1 (STEINICH, Klaus M.) 05 July 2007 (2007-07-05) | 1, 4-5, 7-8 |
| A | paragraphs [0070]-[0077], fig. 1 | 3, 6 |
| | paragraphs [0070]-[0077], fig. 1 | |
| Y | JP 2011-149474 A (FUJI KOKI CORP.) 04 August 2011 (2011-08-04) | 7 |
| | paragraphs [0037]-[0049], fig. 2 | |
| Y | JP 2015-116115 A (DENSO CORPORATION) 22 June 2015 (2015-06-22) | 8 |
| | paragraphs [0015]-[0038], fig. 1, 4 | |
| A | JP 2000-163134 A (AISIN SEIKI KABUSHIKI KAISHA) 16 June 2000 (2000-06-16) | 1-8 |
| | entire text, all drawings | |

☑ Further documents are listed in the continuation of Box C.          ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/003540** |

| C. | DOCUMENTS CONSIDERED TO BE RELEVANT | |
|---|---|---|
| Category* | Citation of document, with indication, where appropriate, of the relevant passages | Relevant to claim No. |
| A | JP 2021-110409 A (FUJI KOKI CORP.) 02 August 2021 (2021-08-02)<br>entire text, all drawings | 2, 5-8 |

Form PCT/ISA/210 (second sheet) (July 2022)

## INTERNATIONAL SEARCH REPORT
### Information on patent family members

International application No.

**PCT/JP2024/003540**

| Patent document cited in search report | | | Publication date (day/month/year) | Patent family member(s) | | | Publication date (day/month/year) |
|---|---|---|---|---|---|---|---|
| JP | 2018-135908 | A | 30 August 2018 | US 2019/0353271 A1 paragraphs [0032]-[0116], fig. 5-12 WO 2018/150863 A1 EP 3584479 A1 KR 10-2019-0105044 A CN 110325775 A | | | |
| US | 2007/0151322 | A1 | 05 July 2007 | DE 102006060213 A1 | | | |
| JP | 2011-149474 | A | 04 August 2011 | (Family: none) | | | |
| JP | 2015-116115 | A | 22 June 2015 | (Family: none) | | | |
| JP | 2000-163134 | A | 16 June 2000 | (Family: none) | | | |
| JP | 2021-110409 | A | 02 August 2021 | WO 2021/145242 A1 CN 114901977 A | | | |

Form PCT/ISA/210 (patent family annex) (July 2022)

**REFERENCES CITED IN THE DESCRIPTION**

**Patent documents cited in the description**

- JP 2018135908 A